# EUROPEAN PATENT SPECIFICATION

(11) **EP 3 943 515 B1**
(45) Date of publication and mention of the grant of the patent: **23.08.2023**
(21) Application number: 20837469.4
(22) Date of filing: 19.06.2020
(51) Int. Cl.: C08F 218/08, C08F 8/12, C08F 216/06, C08F 290/06, C08F 2/20, C08F 14/06

(54) **MODIFIED VINYL ALCOHOL-BASED POLYMER, AND DISPERSION STABILIZER FOR SUSPENSION POLYMERIZATION**
MODIFIZIERTES POLYMER AUF VINYLALKOHOLBASIS UND DIFFUSIONSSTABILISATOR FÜR SUSPENSIONSPOLYMERISATION
POLYMÈRE MODIFIÉ À BASE D'ALCOOL VINYLIQUE ET STABILISANT DE DISPERSION POUR LA POLYMÉRISATION EN SUSPENSION

(30) Priority: 09.07.2019 JP 2019127862
(43) Date of publication of application: 26.01.2022
(73) Proprietor: Denka Company Limited, Tokyo 103-8338 (JP)
(72) Inventor: WATANABE,Wataru, Tokyo 103-8338 (JP)
(74) Representative: Yeadon IP Limited
(86) International application number: PCT/JP2020/024268
(87) International publication number: WO 2021/006016

(56) References cited:
- EP-A1- 0 884 332
- EP-A1- 0 978 538
- EP-A1- 3 031 829
- WO-A1-2010/113569
- WO-A1-2013/115239
- WO-A1-2018/038112
- JP-A- H 111 505
- JP-A- H11 217 413
- JP-A- 2004 075 870
- US-A- 5 849 840

## Description

### FIELD OF THE INVENTION

The present invention relates to a modified vinyl alcohol-based polymer. Further, the present invention relates to a dispersion stabilizer for suspension polymerization, particularly to a dispersion stabilizer suitable for suspension polymerization of vinyl-based compounds typified by vinyl chloride.

### BACKGROUND OF THE INVENTION

When conducting suspension polymerization of a vinyl chloride monomer or a mixture of a vinyl chloride monomer and a monomer copolymerizable therewith, it is essential to use various dispersion stabilizers. Dispersion stabilizers such as polyvinyl alcohol, methylol cellulose, and gelatin are used. Among them, polyvinyl alcohol (hereinafter, also referred to as "PVA") has excellent properties and is generally used most frequently. For example, methods of using a modified PVA having a specific oxyalkylene group in the side chain as a dispersion stabilizer for suspension polymerization of a vinyl-based compound have been proposed (see Patent Literatures 1 to 3).

Patent Literature 1 discloses a dispersion stabilizer for suspension polymerization of a vinyl-based compound, comprising a polyoxyalkylene modified vinyl alcohol-based copolymer (A), which is a vinyl alcohol-based polymer having polyoxyalkylene groups represented by the following general formula in a side chain, wherein the vinyl alcohol-based polymer has a viscosity average degree of polymerization of 600 to 5000, a saponification degree of 60 mol% or more, and a modification amount of the polyoxyalkylene groups of 0.1 to 10 mol%. 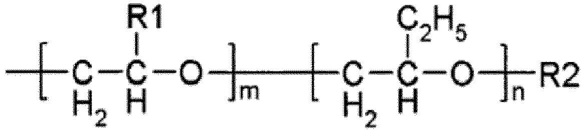 (In the formula, R1 represents a hydrogen atom or a methyl group, R2 represents a hydrogen atom or an alkyl group having 1 to 8 carbon atoms. m and n represent the number of repeating units of oxyalkylene unit, respectively. 1 ≤ m ≤ 10, 3 ≤ n ≤ 20.)

Patent Literature 1 describes the effects of the dispersion stabilizer as follows. When the dispersion stabilizer is used for suspension polymerization of a vinyl-based compound, high polymerization stability can be imparted by adding a small amount. As a result, blocking and scale adhesion due to unstable polymerization are suppressed, and vinyl-based polymer particles having a high bulk specific density, which have few coarse particles and a sharp particle size distribution, can be obtained.

Patent Literature 2 discloses a dispersion stabilizer for suspension polymerization comprising a polyoxyalkylene modified vinyl alcohol-based polymer (A) having polyoxyalkylene groups with 2 to 4 carbon atoms and a repeating unit number of 2 to 100 in a side chain, wherein the polyoxyalkylene modified vinyl alcohol-based polymer (A) has a viscosity average degree of polymerization of less than 500, a saponification degree of more than 70 mol%, and a modification rate of the polyoxyalkylene groups of 0.1 mol% or more and 10 mol% or less.

Patent Literature 2 discloses a polyoxyalkylene group represented by the following general formula as said polyoxyalkylene group. 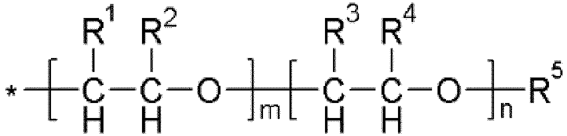 (In the formula, R¹ and R² are both hydrogen atoms, or one is a methyl group and the other is a hydrogen atom. One of R³ and R⁴ is a methyl or ethyl group and the other is a hydrogen atom. R⁵ represents a hydrogen atom or an alkyl group having 1 to 8 carbon atoms. m and n represent the number of repeating units of oxyalkylene unit, respectively. 1 ≤ m ≤ 50 and 1 ≤ n ≤ 50.)

Patent Literature 2 describes the effects of the dispersion stabilizer as follows. When the dispersion stabilizer is used for suspension polymerization of a vinyl-based compound, coarse particles are less likely to be formed due to high polymerization stability, and particles having a uniform particle size can be obtained. Further, blocking and scale adhesion due to unstable polymerization are suppressed, and polymer particles having excellent plasticizer absorbability and monomer removal property can be obtained.

Patent Literature 3 discloses a dispersion stabilizer comprising a partially saponified polyvinyl alcohol-based resin having a saponification degree of 65 to 85 mol%, and 0.1 to 10 mol% of oxyalkylene groups in a side chain, and an iodine coloration degree value of 0.3 or more. According to Patent Literature 3, the oxyalkylene group is represented by the following general formula. 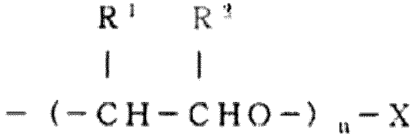 (In the formula, R¹ and R² represent a hydrogen atom or an alkyl group, n represents 0 or a positive integer, and X represents any of a hydrogen atom, an alkyl group, an alkylamide group, or an alkyl ester group, respectively.)

Patent Literature 3 describes the effects of the dispersion stabilizer as follows. Compared with conventional products, even in suspension polymerization using a buffer solution (agent), the protective colloidal property is not deteriorated, the polymerization stability is good, and the obtained vinyl-based polymer has a good performance such as good plasticizer absorption and good fisheye attenuation rate, and coarse particles of the vinyl polymer are not generated.

Patent Literature 4 to 6 disclose further dispersion stabilizers for suspension polymerization comprising a polyoxyalkylene modified vinyl alcohol-based polymer (A) having polyoxyalkylene groups and eventually organic acid groups.

### CITATION LIST

### Patent Literature

[Patent Literature 1] WO 2010/113569 A
[Patent Literature 2] WO 2013/115239 A
[Patent Literature 3] Japanese Patent Publication No. 2004-075870
[Patent Literature 4] WO 2018/038112 A
[Patent Literature 5] EP 0 978 538 A
[Patent Literature 6] EP 3 031 829 A

### SUMMARY OF THE INVENTION

Usually, suspension polymerization of vinyl chloride is carried out in batch. Specifically, it is a method in which a water medium, a dispersion stabilizer, a polymerization initiator and a vinyl chloride monomer are charged in a polymerization can, and after adding required additives, the temperature is gradually raised to a polymerization temperature to carry out the reaction. However, in such a method, it takes a very long time for charging and raising the temperature, and the charging and raising the temperature themselves may occupy 10% or more of the polymerization time of one cycle, which reduces the productivity of the polymer. Therefore, it has been a cause of decrease in polymer productivity and has been a long-standing concern for those skilled in the art. Accordingly, various methods have been studied to solve the problem, and a hot water charging polymerization method (hot water charging method) that uses hot water of 40 °C or higher has been proposed. It shows a great effect in terms of process and time reduction during polymerization. In addition, in recent years, even in regions with higher temperatures such as Southeast Asia, production of vinyl chloride resin has become active due to the growth of infrastructure demand, and the number of cases where hot water of 40 °C or higher is used is increasing.

However, the dispersion stabilizers described in Patent Literatures 1 to 3 do not exhibit their original excellent effect as a dispersion stabilizer because they precipitate a part of the polyvinyl alcohol when the hot water is supplied, making the aqueous solution cloudy. Moreover, they may adversely affect the polymerization stability of the vinyl chloride-based monomers and the physical characteristics of the resin. Specifically, there has been an adverse effect that satisfactory properties cannot be constantly obtained with respect to the following required properties: (1) there should be few coarse particles in the produced vinyl chloride resin particles; (2) resin particles having uniform particle sizes as much as possible should be obtained, and scale adhesion should be prevented; (3) a resin having a high bulk density should be obtained, and as a result, molding processability during vinyl chloride processing should be improved.

Therefore, one object of the present invention is to provide a modified vinyl alcohol-based polymer suitable as a dispersion stabilizer for suspension polymerization, which has excellent handleability (for example, being able to adopt a hot water charging polymerization method that uses hot water of 40 °C or higher for suspension polymerization of vinyl-based compounds such as vinyl chloride) and satisfies the above-described required properties (1) to (3).

As a result of intensive studies to solve the above problem, the present inventors have found that it is effective to use a modified vinyl alcohol-based polymer as a dispersion stabilizer for suspension polymerization of a vinyl-based compound, wherein the modified vinyl alcohol-based polymer has a certain polyoxyalkylene unit (hereinafter referred to as "alkylene modifying group") at a modification rate of 0.01 mol% to 5 mol%, and a certain organic acid unit at a modification rate of 0.1 mol% to 10 mol%.

Therefore, in one aspect, the present invention provides:
a modified vinyl alcohol-based polymer, comprising a polyoxyalkylene unit, and an organic acid unit bonded to a polyvinyl alcohol chain, the polyoxyalkylene unit comprising a moiety represented by a general formula (I), the moiety being bonded to the polyvinyl alcohol chain only via an ether bond and/or a carbon-carbon bond,
wherein a ratio of a number of moles of monomer units constituting the polyvinyl alcohol chain of the modified vinyl alcohol-based polymer and bonded to the polyoxyalkylene unit to a total number of moles of the monomer units constituting the polyvinyl alcohol chain of the modified vinyl alcohol-based polymer is 0.01 mol% to 5 mol%, as measured according to the method disclosed therefor in the description, and a ratio of a number of moles of the organic acid unit to the total number of moles of the monomer units constituting the polyvinyl alcohol chain of the modified vinyl alcohol-based polymer is 0.1 mol% to 10 mol%, as measured according to the method disclosed therefor in the description, and wherein a saponification degree is more than 70 mol%, as measured according to the method disclosed therefor in the description.

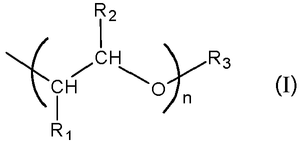

In the formula, both R₁ and R₂ are a hydrogen atom, and R₃ is an alkyl group or a hydrogen atom. n represents a number of repeating units and is an integer of 5 ≤ n ≤ 70.

In an embodiment of the above modified vinyl alcohol-based polymer, at least a part of the polyoxyalkylene unit has a moiety represented by the general formula (II).

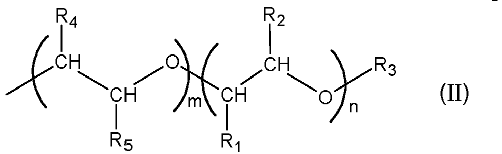

In the formula, R₁, R₂, and R₃ are as described above. One of R₄ and R₅ is a methyl group or an ethyl group, and the other is a hydrogen atom. m represents a number of repeating units, and 1 ≤ m ≤ 30, provided that the moiety with the number of repeating units of n and the moiety with the number of repeating units of m are different.

In another embodiment of the above modified vinyl alcohol-based polymer, the organic acid unit comprises a carboxylic acid ester.

In another embodiment of the above modified vinyl alcohol-based polymer, a viscosity average degree of polymerization is 500 to 4000, as measured according to the method disclosed therefor in the description.

In another aspect, the present invention provides:
a dispersion stabilizer for suspension polymerization, comprising the modified vinyl alcohol-based polymer according to the above first aspect or any of the above embodiments thereof.

In another aspect, the present invention provides:
a method for manufacturing a vinyl-based resin, comprising conducting suspension polymerization by dispersing a vinyl-based compound monomer or a mixture of a vinyl-based compound monomer and a monomer copolymerizable therewith in water using the dispersion stabilizer for suspension polymerization according to the above second aspect.

In yet another aspect, the present invention provides:
a method for manufacturing the modified vinyl alcohol-based polymer according to the above first aspect or any of the above embodiments thereof, comprising a step of copolymerizing a vinyl ester-based monomer with an unsaturated monomer having the polyoxyalkylene unit in coexistence with an unsaturated organic acid to obtain a modified vinyl ester polymer.

When suspension polymerization of a vinyl-based compound is carried out using the dispersion stabilizer for suspension polymerization of the present invention, the formation of coarse particles is reduced, and resin particles with high uniformity of particle size can be obtained. Further, since the formation of coarse particles is reduced, blocking during polymerization is suppressed, and particles having high particle size uniformity can be obtained, so that scale adhesion can be reduced. In addition, a resin having a high bulk density can be obtained, and the productivity during resin processing can be improved. Further, this dispersant can be used in a hot water charging polymerization method (hot water charging method) using hot water of 40 °C or higher, or in a region where the average temperature is high, without impairing the original properties. As described above, the dispersion stabilizer for suspension polymerization according to the present invention can have the required performance which was difficult to achieve by the prior arts.

### DETAILED DESCRIPTION OF THE INVENTION

In one embodiment, the dispersion stabilizer for suspension polymerization of the present invention comprises a modified vinyl alcohol-based polymer (hereinafter, also referred to as "modified PVA"), comprising a polyoxyalkylene unit, and an organic acid unit bonded to a polyvinyl alcohol chain. The polyoxyalkylene unit comprises a moiety represented by the general formula (I), and the moiety is bonded to the polyvinyl alcohol chain only via an ether bond and/or a carbon-carbon bond.

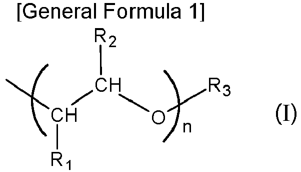

In the formula, both R₁ and R₂ are a hydrogen atom, and R₃ is an alkyl group or a hydrogen atom. n represents a number of repeating units and is an integer of 5 ≤ n ≤ 70.
n is preferably 10 or more, more preferably 15 or more, and more preferably 20 or more. Further, n is preferably 70 or less, more preferably 60 or less.

It is preferable that at least a part of the polyoxyalkylene unit have two or more different moieties represented by the general formula (II). It is more preferable that all of the polyoxyalkylene units have two or more different oxyalkylene moieties represented by the general formula (II). Specifically, as the two or more moieties represented by the general formula (II), mention can be made to those in which the moiety having the number of repeating units of m is butylene oxide (R₄ or R₅ is an ethyl group and the other is a hydrogen atom) and the moiety having the number of repeating units of n is an ethylene oxide (both R₁ and R₂ are hydrogen atoms), and those in which the moiety having the number of repeating units of m is propylene oxide (R₄ or R₅ is a methyl group and the other is a hydrogen atom), and the moiety having the number of repeating units of n is ethylene oxide (both R₁ and R₂ are hydrogen atoms). Here, the moiety where the number of repeating units is m and the moiety where the number of repeating units is n may be in either a random or a block arrangement, but from the viewpoint that the physical properties due to the alkylene modifying group can be more easily expressed, a block arrangement is preferable.

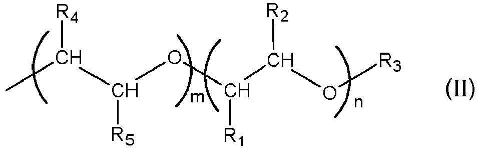

In the formula, both R₁ and R₂ are a hydrogen atom, and R₃ is an alkyl group or a hydrogen atom. n represents a number of repeating units and is an integer of 5 ≤ n ≤ 70. One of R₄ and R₅ is a methyl group or an ethyl group, and the other is a hydrogen atom. m represents a number of repeating units, and 1 ≤ m ≤ 30, provided that the moiety with the number of repeating units of n and the moiety with the number of repeating units of m are different.
m is preferably 3 or more, and more preferably 5 or more. Further, m is preferably 25 or less, more preferably 20 or less.

The alkyl group represented by R₃ can be, for example, an alkyl group having 1 to 10 carbon atoms, preferably an alkyl group having 1 to 5 carbon atoms, and more preferably an alkyl group having 1 to 3 carbon atoms. Specific examples of the alkyl group represented by R₃ include a methyl group, an ethyl group, an n-propyl group and an isopropyl group.

It is preferable that the moieties represented by the general formula (I) and the general formula (II) are bonded to the polyvinyl alcohol chain only via an ether bond and/or a carbon-carbon bond, respectively, from the viewpoint of preventing detachment due to a change in pH and failure to exhibit performance.

Examples of the organic acid unit in the modified PVA include unsaturated carboxylic acids such as acrylic acid, methacrylic acid, crotonic acid and maleic acid and salts thereof, as well as unsaturated carboxylic acid alkyl esters such as dimethyl maleate and monomethyl maleate. Further, unsaturated sulfonic acids such as ethylene sulfonic acid, allyl sulfonic acid and methallyl sulfonic acid and salts thereof, as well as unsaturated sulfonic acid esters can be mentioned. The modified PVA may comprise one type of organic acid unit, or may comprise two types or more.

In the modified PVA of the present invention, the organic acid unit is not particularly limited, but an unsaturated carboxylic acid ester that forms a double bond in the polymer that can exhibit reactivity during polymerization of a vinyl-based compound at the time of saponification and drying is preferable.

It is important that the modified PVA has an alkylene modification rate of 0.01 mol% or more and 5 mol% or less, although depending on the type of the alkylene modifying group. If the alkylene modification rate exceeds 5 mol%, the balance of hydrophilic groups and hydrophobic groups contained in one molecule of the modified PVA cannot be maintained, and the water solubility of the modified PVA is lowered or the affinity with vinyl-based compound monomers is impaired, so it becomes difficult to use it as a dispersion stabilizer for suspension polymerization. Therefore, it is important that the alkylene modification rate is 5 mol% or less, preferably 4 mol% or less, and more preferably 2 mol% or less. On the other hand, when the alkylene modification rate is less than 0.01 mol%, although the water solubility is excellent, the number of modifying groups contained in the modified PVA is small, and the required physical properties are not sufficiently exhibited. Therefore, it is important that the alkylene modification rate is 0.01 mol% or more, preferably 0.05 mol% or more, and more preferably 0.1 mol% or more.

The alkylene modification rate is a ratio (mol%) of the number of moles of monomer units constituting the polyvinyl alcohol chain of the modified PVA and bonded to the polyoxyalkylene unit having the moiety represented by the above general formula (I) to the total number of moles of the monomer units constituting the polyvinyl alcohol chain of the modified PVA. The alkylene modification rate can be determined by proton NMR. Specifically, after the modified PVA is saponified to a saponification degree of 99.95 mol% or more, it is sufficiently washed with methanol to prepare a modified PVA for analysis. The prepared modified PVA for analysis is dissolved in heavy water, and a few drops of a heavy aqueous NaOH solution are added to adjust the pH to 14, and then the measurement is carried out at 80 °C using proton NMR. When calculating from the oxyethylene moiety (for example, R₁ = H, R₂ = H), the content is calculated by a conventional method from the integral value of the peak of 1.2 to 1.8 ppm attributed to the methylene group of the polyvinyl alcohol chain of the modified PVA and the integral value of the peak of 3.6 to 3.7 ppm attributed to the oxyethylene moiety. Specifically, assuming that the integral value of the methylene group of the polyvinyl alcohol chain of the modified PVA is b, the integral value of the oxyethylene moiety is a, and the number of repeating units of the oxyethylene moiety is x, considering the number of protons (2H for methylene group and 4H for ethylene group), the modification rate is calculated as {a / (4 × x)} / (b / 2) × 100 (mol%). For example, when a = 1, x = 1, and b = 100, it is calculated as 0.5 mol%. In addition, when calculating from the oxybutylene or oxypropylene moiety, the content is calculated by a conventional method from the integral value of the peak of 1.2 to 1.8 ppm attributed to the methylene group of the polyvinyl alcohol chain of the modified PVA and the integral value of peak of 0.80 to 0.95 ppm attributed to the terminal methyl group of the oxybutylene moiety (R₁ = H, R₂ = CH₂CH₃ (or R₁ = CH₂CH₃, R2 = H)) or the oxypropylene moiety (R₁ = H, R₂ = CH₃ (or R₁ = CH₃, R₂ = H)). Specifically, assuming that the integral value of the methylene group of the polyvinyl alcohol chain of the modified PVA is b, the integral value of the oxybutylene moiety or the oxypropylene moiety is c, and the number of repeating units is y, considering the number of protons (2H for the methylene group and 3H for the methyl group), the modification rate is calculated as {c / (3 × y)} / (b / 2) × 100 (mol%). For example, when c = 1, y = 1, and b = 100, it is calculated as 0.67 mol%. In addition, when the modified PVA has both an oxyethylene moiety and an oxypropylene moiety or an oxybutylene moiety, the alkylene modification rate calculated based on the integral value of the peak attributed to the terminal methyl group of the oxypropylene moiety or the oxybutylene moiety is higher in measurement accuracy than the alkylene modification rate calculated from the oxyethylene moiety. Accordingly, if there is a difference between the two values, the alkylene modification rate calculated based on the integral value of the peak attributed to the terminal methyl group of the oxypropylene moiety or the oxybutylene moiety is adopted.

Further, the organic acid modification rate of the modified PVA needs to be 0.1 mol% to 10 mol%. If it is less than 0.1 mol%, it becomes difficult to keep the cloud point at 40 °C or higher, and the unsaturated double bond origin due to the carbonyl group decreases. As a result, a vinyl-based resin having an appropriate particle size cannot be obtained, and it becomes a vinyl-based resin having a low bulk density. Therefore, the organic acid modification rate needs to be 0.1 mol% or more, preferably 0.3 mol% or more, and more preferably 0.5 mol% or more. In addition, when the organic acid modification rate exceeds 10 mol%, the physical properties change significantly due to the change in pH, so that the protective colloidal property at the time of PVC polymerization may decrease, or it may become chemically unstable and may become insolubilized or gelled. Therefore, the organic acid modification rate needs to be 10 mol% or less, preferably 8 mol% or less, and more preferably 4 mol% or less.

The organic acid modification rate is a ratio (mol%) of the number of moles of the organic acid unit to the total number of moles of the monomer units constituting the polyvinyl alcohol chain of the modified PVA. The method for determining the organic acid modification rate is not particularly limited and can be obtained by acid value or the like, but it is convenient to measure it by proton NMR. Specifically, after the modified PVA is completely saponified to a saponification degree of 99.95 mol% or more, the modified PVA is thoroughly washed with methanol to prepare a modified PVA for analysis. The prepared modified PVA for analysis is dissolved in heavy water, and a few drops of a heavy aqueous NaOH solution are added to adjust the pH to 14, and then the measurement is performed at 80 °C to obtain a ¹H-NMR spectrum. Calculation is conducted based on the integrated value of the peak of the methylene group (1.2 to 1.8 ppm) of the polyvinyl alcohol chain of the modified PVA. For example, when the organic acid unit has a carboxyl group, it is calculated from the peak of 2.2 to 2.9 ppm, which is a hydrogen atom of a carbon adjacent to a carboxyl group. When the organic acid unit is a sulfonyl group, it is calculated from the peak of 2.8 to 3.2 ppm, which is attributed to a hydrogen atom of a carbon adjacent to the sulfonic acid. In the case where the organic acid unit has a carboxyl group as an example, assuming the integral value of the methylene group of the polyvinyl alcohol chain of the modified PVA is b, and the integral value of the hydrogen atom of the carbon adjacent to the carboxyl group is a, considering the number of protons (methylene group is 2H), the modification rate is calculated as a / (b / 2) × 100 (mol%). For example, when a = 1 and b = 100, it is calculated as 2.0 mol%.

The viscosity average degree of polymerization of the modified PVA is preferably 500 or more, and more preferably 600 or more, in order to enhance the dispersion stability during suspension polymerization of a vinyl-based compound. Further, the viscosity average degree of polymerization of the modified PVA is preferably 4000 or less, more preferably 2000 or less, even more preferably 1500 or less, and even more preferably 1000 or less, in order to prevent the aqueous solution from becoming too viscous and difficult to handle.

The viscosity average degree of polymerization is determined according to JIS K6726: 1994. That is, the modified PVA is completely saponified, purified, and then it is determined from the intrinsic viscosity [η] measured in water or dimethyl sulfoxide (DMSO) at 30 °C.

The saponification degree of the modified PVA is more than 70 mol% in order to increase the water solubility and the cloud point, and to facilitate handling. In addition, the saponification degree of the modified PVA is preferably 99.9 mol% or less, preferably 90 mol% or less, and even more preferably 80 mol% or less, in order to increase the porosity of the particles obtained by suspension polymerization of the vinyl-based compound and to enhance plasticizer absorbability.

The saponification degree of the modified PVA is determined according to JIS K6726: 1994. That is, it can be determined by quantifying the residual acetic acid group (mol%) in the sample with sodium hydroxide and subtracting it from 100.

The method for manufacturing the modified PVA according to the present invention is not particularly limited, but for example, a method of reacting a hydroxyl group of PVA with a polyoxyalkylene group and an organic acid for grafting can be used. In particular, a method, which comprises a step of copolymerizing a vinyl ester-based monomer typified by vinyl acetate with an unsaturated monomer having the polyoxyalkylene unit having a moiety represented by the general formula (I) in coexistence with an unsaturated organic acid to obtain a modified vinyl ester polymer, and a step of saponifying the obtained modified vinyl ester polymer, is easy and economical, and is preferably used.

As an unsaturated monomer that induces the modified structure represented by the general formula (I), mention can be made to polyoxyalkylene alkenyl ether, polyoxyalkylene mono (meth) allyl ether, polyoxyalkylene monovinyl ether, and the like, and specifically, mention can be made to polyoxybutylene polyoxyethylene alkenyl ether, polyoxypropylene polyoxyethylene alkenyl ether, polyoxybutylene alkenyl ether, polyoxybutylene polyoxypropylene alkenyl ether, polyoxypropylene alkenyl ether, polyoxypropylene oxyethylene alkenyl ether, polyoxybutylene polyoxyethylene monoallyl ether, polyoxypropylene polyoxyethylene monoallyl ether, polyoxybutylene monoallyl ether, polyoxybutylene polyoxypropylene monoallyl ether, polyoxypropylene monoallyl ether, polyoxypropylene oxyethylene monoallyl ether, polyoxybutylene polyoxyethylene monovinyl ether, polyoxypropylene polyoxyethylene monovinyl ether, polyoxybutylene monovinyl ether, polyoxybutylene polyoxypropylene monovinyl ether, polyoxypropylene monovinyl ether, polyoxypropylene oxyethylene monovinyl ether.

Among them, ethers represented by the following general formula (III) are more preferably used from the viewpoint of reactivity and properties. Specific examples of the polyoxyalkylene alkenyl ether represented by the general formula (III) include polyoxybutylene polyoxyethylene alkenyl ether.

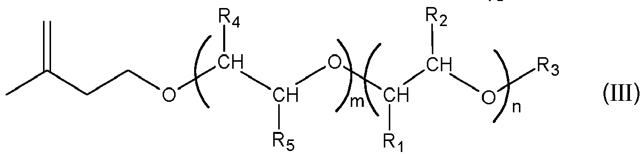

In the general formula (III), R₁, R₂, R₃, R₄, R₅, m, and n are the same as those in the general formula (II).

As examples of vinyl ester-based monomers, mentioned can be made to vinyl acetate, as well as vinyl formate, vinyl propionate, vinyl valerate, vinyl caprate, vinyl laurate, vinyl stearate, vinyl benzoate, vinyl pivalate and vinyl ester of versatic acid.

The method for inducing the organic acid unit is not particularly limited, but a method of copolymerizing with an unsaturated carboxylic acid (such as acrylic acid, methacrylic acid, crotonic acid, and maleic acid) or a salt thereof, or an olefin sulfonic acid (such as ethylene sulfonic acid, allyl sulfonic acid, and methallyl sulfonic acid) or a salt thereof, which is copolymerizable with a vinyl ester-based monomer, is preferably used. Further, a method of inducing an organic acid unit (here, a carboxylic acid) by copolymerizing with an unsaturated carboxylic acid alkyl ester such as dimethyl maleate or monomethyl maleate and then saponifying is preferably used.

The temperature at which the vinyl ester-based monomer is copolymerized is not particularly limited, but is preferably 0 °C or higher and 200 °C or lower, and more preferably 30 °C or higher and 150 °C or lower. If the temperature at which the copolymerization is carried out is lower than 0 °C, a sufficient polymerization rate cannot be obtained, which is not preferable. Further, when the temperature at which the polymerization is carried out is higher than 200 °C, it is difficult to obtain the desired PVA. An example of methods of controlling the temperature adopted at the time of copolymerization to 0 °C or higher and 200 °C or lower includes a method of controlling it with an outer jacket using an appropriate heat medium such as water.

The polymerization method adopted for performing the present copolymerization may be any of batch polymerization, semi-batch polymerization, continuous polymerization and semi-continuous polymerization. As the polymerization method, any method can be adopted from known methods such as a massive polymerization method, a solution polymerization method, a suspension polymerization method, and an emulsion polymerization method. Among them, rather than suspension polymerization and emulsion polymerization in which it is necessary to control the polymerized particle size because modifying species used often have water-soluble and surface-active ability that affect the polymerized particle size, it is preferable to adopt a solution polymerization method or massive polymerization method in which polymerization is carried out in the presence of an alcohol-based solvent or without using a solvent. As the alcohol-based solvent used in the massive polymerization method or the solution polymerization method, methanol, ethanol, isopropanol can be used, but the alcohol solvent is not limited thereto. Further, these solvents may be used alone, or two or more kinds of these solvents may be used in combination.

Examples of the polymerization initiator for radical polymerization of the vinyl ester-based monomer include, but not limited to, azo compounds such as azobisisobutyronitrile, azobis-2,4-dimethylvaleronitrile, azobis (4-methoxy-2,4-dimethylvaleronitrile), azobisdimethylvaleronitrile, and azobismethoxyvaleronitrile; peroxides such as acetyl peroxide, benzoyl peroxide, lauroyl peroxide, acetylcyclohexylsulfonyl peroxide, and 2,4,4-trimethylpentyl-2-peroxyphenoxyacetate; percarbonate compounds such as diisopropylperoxydicarbonate, di-2-ethylhexyl peroxydicarbonate, and diethoxyethylperoxydicarbonate; and perester compounds such as t-butyl peroxyneodecanoate, α-cumylperoxyneodecanoate, and t-butylperoxyneodecanoate. They can be used alone, or two or more of them can be used in combination.

Further, when the copolymerization is carried out at a high temperature, coloring of PVA due to decomposition of the vinyl ester-based monomer may be observed. In that case, for the purpose of preventing coloration, it is permissible to add an antioxidant such as citric acid to the polymerization system at about 1 ppm or more and 100 ppm or less (relative to the mass of the vinyl ester-based monomer).

The saponification method when manufacturing the modified PVA according to the present invention is not particularly limited, and it is preferable to saponify the polymer obtained by the above-mentioned method in accordance with a conventional method using alcohols which is also used as a solvent. Examples of the alcohol include methanol, ethanol and butanol.

The concentration of the polymer in alcohol can be selected from the range of 20 to 50% by mass. As the alkali catalyst, hydroxides of alkali metals such as sodium hydroxide, potassium hydroxide, sodium methylate, sodium ethylate and potassium methylate, and alkali catalysts such as alcoholate can be used. As the acid catalyst, an aqueous inorganic acid solution such as hydrochloric acid or sulfuric acid, and an organic acid such as p-toluenesulfonic acid can be used. The amount of these catalysts used needs to be 1 to 100 mmol equivalent with respect to the vinyl ester-based monomer. In such a case, the saponification temperature is not particularly limited, but is usually in the range of 10 to 70 °C, preferably selected from the range of 30 to 50 °C. The reaction is usually carried out for 0.5 to 3 hours.

The dispersion stabilizer for suspension polymerization according to the present invention may contain PVA other than the above-mentioned modified PVA and various other additives as long as the essence of the present invention is not impaired. As the additives, mention can be made to, for example, polymerization modifiers such as aldehydes, halogenated hydrocarbons, and mercaptans; polymerization inhibitors such as phenol compounds, sulfur compounds, and N-oxide compounds; pH regulators; crosslinking agents; preservatives; antifungal agents, anti-blocking agents; anti-foaming agent, and the like. From the viewpoint of significantly exerting the effect of the present invention, the dispersion stabilizer for suspension polymerization according to the present invention preferably comprises 10% by mass or more, more preferably 30% by mass or more, and even more preferably 70% by mass or more of the modified PVA.

The dispersion stabilizer for suspension polymerization according to the present invention can be particularly preferably used for suspension polymerization of vinyl-based compounds. As the vinyl-based compounds, mention can be made to vinyl halides such as vinyl chloride; vinyl esters such as vinyl acetate and vinyl propionate; acrylic acid, methacrylic acid, and esters and salts thereof; maleic acid, fumaric acid, and esters and anhydrides thereof; styrene, acrylonitrile, vinylidene chloride, vinyl ether.

Among these, the dispersion stabilizer for suspension polymerization according to the present invention is particularly preferably used for suspension polymerization of vinyl chloride alone or polymerization of vinyl chloride with a monomer that can be copolymerized with vinyl chloride. As a monomer that can be copolymerized with vinyl chloride, mention can be made to vinyl esters such as vinyl acetate and vinyl propionate; esters of (meth) acrylic acid such as methyl (meth) acrylate and ethyl (meth) acrylate; α-olefins such as ethylene and propylene; unsaturated dicarboxylic acids such as maleic anhydride and itaconic acid; acrylonitrile, styrene, vinylidene chloride and vinyl ether.

The dispersion stabilizer for suspension polymerization according to the present invention can be used alone or in combination with other stabilizers such as cellulosic derivatives and surfactants.

By using the dispersion stabilizer for suspension polymerization according to the present invention, a vinyl chloride resin having a high bulk density of resin particles, a uniform particle size distribution, and excellent physical characteristics can be constantly obtained. Hereinafter, the method for polymerizing a vinyl-based compound will be specifically described with reference to examples, but the method is not limited thereto.

In the case of manufacturing resin particles of a vinyl-based compound such as vinyl chloride resin particles, the above-mentioned dispersion stabilizer for suspension polymerization is added in an amount of 0.01% by mass to 0.3% by mass, preferably 0.04% by mass to 0.15% by mass, with respect to the vinyl-based compound monomer. Further, the ratio of the vinyl-based compound to water can be a mass ratio of vinyl-based compound : water = 1:0.9 to 1:3, preferably vinyl-based compound : water = 1:1 to 1:1.5.

The polymerization initiator may be one conventionally used for polymerizing vinyl-based compounds, and examples include percarbonate compounds such as diisopropylperoxydicarbonate, di-2-ethylhexyl peroxydicarbonate, and diethoxyethylperoxydicarbonate; perester compounds such as t-butylperoxyneodecanoate, α-cumylperoxyneodecanoate, t-butylperoxyneodecanoate; peroxides such as acetylcyclohexylsulfonyl peroxide and 2,4,4-trimethylpentyl-2-peroxyphenoxyacetate; azo compounds such as azobis-2,4-dimethylvaleronitrile and azobis (4-methoxy-2,4-dimethylvaleronitrile); and further potassium persulfate, ammonium persulfate and hydrogen peroxide.

They can be used alone, or two or more of them can be used in combination.

Further, it is also optional to add a polymerization modifier, a chain transfer agent, a gelation improver, an antistatic agent and a pH regulator, which are appropriately used for the polymerization of vinyl-based compounds.

In carrying out the polymerization of the vinyl-based compound, the charging ratio of each component, the polymerization temperature may be determined according to the conditions conventionally adopted in the suspension polymerization of the vinyl-based compound, and there is no particular reason for limitation.

### EXAMPLES

Hereinafter, the present invention will be described in more detail with reference to examples.

### (Example 1)

1220 g of vinyl acetate, 1150 g of methanol, 1.6 g of dimethyl maleate, and 151 g of polyoxyalkylene alkenyl ether represented by the general formula (III) with m = 5 to 9, n = 45 to 55 (monomer A: a commercially available product) as a modifying species were charged into a polymerization can, and the inside of the system was replaced with nitrogen for 30 minutes. It was confirmed by NMR that the monomer A had m = 5 to 9 and n = 45 to 55. 0.3 g of azobisisobutyronitrile was charged into a polymerization can, and polymerization was performed at 60 °C for 11 hours while additionally adding dropwise 900 mL of a solution prepared by mixing vinyl acetate, methanol, and dimethyl maleate at a mass ratio of 40:58:2. After that, the dropping was stopped, and the mixture was cooled to stop the polymerization. Then, the unreacted vinyl acetate was removed by a conventional method, and the obtained modified vinyl acetate polymer was saponified with sodium hydroxide by a conventional method. Then, acetic acid was added to prepare a dispersion stabilizer having -COOH and - COONa. The viscosity average degree of polymerization, saponification degree and the modification rate of the obtained dispersion stabilizer were determined by the above-described analytical methods, and the viscosity average degree of polymerization was 750, the saponification degree was 72 mol%, the alkylene modification rate was 0.19 mol%, and the organic acid modification rate was 0.92 mol%.

### <Evaluation of cloud point>

An aqueous solution having a concentration of 4% by mass of the dispersion stabilizer obtained above was prepared. Approximately 5 cc was put in a glass test tube, a thermometer was placed in the measuring solution, and the temperature was raised while stirring to make the measuring solution cloudy. After that, the temperature at which the measuring solution became completely transparent was read while slowly cooling with stirring, which was used as the cloud point. As a result, the cloud point was 45 °C.

### <Suspension polymerization of vinyl chloride>

In a 30 L stainless steel autoclave equipped with a stirrer, 12 kg of water at 30 °C, 4.0 g of the dispersion stabilizer obtained above, 4.6 g of t-butylperoxyneodecanoate as a polymerization initiator and 1 g of α-cumylperoxyneodecanoate were charged while stirring. After degassing the autoclave in vacuum, 5 kg of vinyl chloride monomer was added, and polymerization was performed at 57 °C for 4 hours.

### <Evaluation of vinyl chloride resin>

The average particle size, the particle size distribution, and the bulk specific density of the obtained vinyl chloride resin were evaluated by the following methods.

The average particle size was measured according to JIS Z8815: 1994. Sieves with 60 mesh (opening 250 µm), 80 mesh (opening 180 µm), 100 mesh (opening 150 µm), 150 mesh (opening 106 µm), 200 mesh (opening 75 µm) were used, and the particle size with a cumulative frequency of 50% (mass basis) (D50) was defined as the average particle size, and the difference between the particle size having a cumulative frequency of 80% (mass basis) (D80) and the particle size having a cumulative frequency of 20% (mass basis) (D20) was defined as the particle size distribution.

The bulk specific density was measured according to JIS K6720-2: 1999.

### (Example 2)

A modified vinyl acetate polymer was obtained in the same manner as in Example 1 except that the monomer A was changed to 101 g, and then a dispersion stabilizer was prepared by saponifying with sodium hydroxide. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Example 3)

The modified vinyl acetate polymer obtained in Example 2 was saponified by adjusting the amount of sodium hydroxide to obtain a modified vinyl alcohol-based polymer dispersion stabilizer having a saponification degree of 76%. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Example 4)

1220 g of vinyl acetate, 1350 g of methanol, 2.4 g of dimethyl maleate, and 52 g of polyoxyalkylene alkenyl ether represented by the general formula (III) as a modifying species with m = 5 to 9, n = 15 to 25 (monomer B: a commercially available product) were charged into a polymerization can, and the inside of the system was replaced with nitrogen for 30 minutes. It was confirmed by NMR that the monomer B had m = 5 to 9, n = 15 to 25. 0.3 g of azobisisobutyronitrile was charged into a polymerization can, and polymerization was performed at 60 °C for 11 hours while additionally adding dropwise 900 mL of a solution prepared by mixing vinyl acetate, methanol, and dimethyl maleate at a mass ratio of 45:52:3. After that, the dropping was stopped, and the mixture was cooled to stop the polymerization. Then, the unreacted vinyl acetate was removed by a conventional method, and the obtained modified vinyl acetate polymer was saponified with sodium hydroxide by a conventional method to prepare a dispersion stabilizer. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Example 5)

1850 g of vinyl acetate, 1000 g of methanol, 1.2 g of dimethyl maleate, and 133 g of monomer B as a modifying species were charged into a polymerization can, and the inside of the system was replaced with nitrogen for 30 minutes. 0.3 g of azobisisobutyronitrile was charged into a polymerization can, and polymerization was performed at 60 °C for 11 hours while additionally adding dropwise 800 mL of a solution prepared by mixing vinyl acetate, methanol, and dimethyl maleate at a mass ratio of 45:52:2. After that, the dropping was stopped, and the mixture was cooled to stop the polymerization. Then, the unreacted vinyl acetate was removed by a conventional method, and the obtained modified vinyl acetate polymer was saponified with sodium hydroxide by a conventional method to prepare a dispersion stabilizer. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Example 6)

1680 g of vinyl acetate, 1100 g of methanol, 7.3 g of dimethyl maleate, and 130 g of monomer A as a modifying species were charged into a polymerization can, and the inside of the system was replaced with nitrogen for 30 minutes. 0.3 g of azobisisobutyronitrile was charged into a polymerization can, and polymerization was performed at 60 °C for 11 hours while additionally adding dropwise 820 mL of a solution prepared by mixing vinyl acetate, methanol, and dimethyl maleate at a mass ratio of 64:28:8. After that, the dropping was stopped, and the mixture was cooled to stop the polymerization. Then, the unreacted vinyl acetate was removed by a conventional method, and the obtained modified vinyl acetate polymer was saponified with sodium hydroxide by a conventional method to prepare a dispersion stabilizer. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Example 7)

A dispersion stabilizer was prepared in the same manner as in Example 1 except that instead of the monomer A, 56 g of polyoxyethylene glycol allyl ether with n = 15 to 25 (monomer C) (Uniox PKA-5005 provided by NOF CORPORATION) was charged into a polymerization can. It was confirmed by NMR that the monomer C had n = 15 to 25. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Example 8)

A dispersion stabilizer was prepared in the same manner as in Example 1 except that instead of the monomer A, 74 g of polyethylene glycol polypropylene glycol allyl ether represented by the general formula (III) with m = 15 to 25 and n = 15 to 25 (monomer D) (Unilube PKA-5013 provided by NOF CORPORATION) was charged into a polymerization can. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Comparative Example 1)

1600 g of vinyl acetate, 860 g of methanol, and 151 g of monomer A were charged into a polymerization can, and the inside of the system was replaced with nitrogen for 30 minutes. 0.3 g of azobisisobutyronitrile was charged into a polymerization can, and polymerization was performed at 60 °C for 9 hours, and then cooled to terminate the polymerization. Then, the unreacted vinyl acetate was removed by a conventional method, and the obtained modified vinyl acetate polymer was saponified with sodium hydroxide by a conventional method to prepare a dispersion stabilizer. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Comparative Example 2)

1220 g of vinyl acetate, 1150 g of methanol, and 1.6 g of dimethyl maleate were charged into a polymerization can, and the inside of the system was replaced with nitrogen for 30 minutes. 0.3 g of azobisisobutyronitrile was charged into a polymerization can, and polymerization was performed at 60 °C for 12 hours while additionally adding dropwise 900 mL of a solution prepared by mixing vinyl acetate, methanol, and dimethyl maleate at a mass ratio of 40:58:2. After that, the dropping was stopped, and the mixture was cooled to stop the polymerization. Then, the unreacted vinyl acetate was removed by a conventional method, and the obtained modified vinyl acetate polymer was saponified with sodium hydroxide by a conventional method to prepare a dispersion stabilizer. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Comparative Example 3)

3000 g of vinyl acetate, and 15 g of acetaldehyde as a modifying species were charged into a polymerization can, and the inside of the system was replaced with nitrogen for 30 minutes. 0.2 g of azobisisobutyronitrile was charged into a polymerization can, and polymerization was performed at 65 to 75 °C for 6 hours, and then cooled to terminate the polymerization. Then, a dispersion stabilizer was prepared according to Example 1. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out.

### (Comparative Example 4)

1600 g of vinyl acetate, 700 g of methanol, and 0.35 g of polyethylene glycol monomethacrylate (Blemmer PP-350 provided by NOF CORPORATION, hereinafter referred to as "monomer E") as a modifying species were charged into a polymerization can, and the inside of the system was replaced with nitrogen for 30 minutes. Further, a comonomer solution in which monomer E was dissolved in methanol at a concentration of 5.7% by mass was prepared, and substituted with nitrogen by bubbling nitrogen gas. 2.5 g of azobisisobutyronitrile was charged into a polymerization can, and polymerization was performed at 60 °C for 9 hours while additionally adding dropwise 300 mL of comonomer solution (solution of monomer E dissolved in methanol at a concentration of 5.7% by mass), and then cooled to terminate the polymerization. The total amount of methanol added until the polymerization was stopped was 1066 g, and the total amount of monomer E was 22.3 g. After that, a dispersion stabilizer was prepared in the same manner as in Example 1. The viscosity average degree of polymerization, the saponification degree, the modification rate and the cloud point of the obtained dispersion stabilizer were determined by the above-described analytical methods. Further, suspension polymerization of vinyl chloride was carried out under the same conditions as in Example 1 except that the obtained dispersion stabilizer here was used, and the evaluations were carried out. In addition, the proton NMR of the obtained dispersion stabilizer was performed, but the peak derived from the modifying species which was observed in polyvinyl acetate was not observed in polyvinyl alcohol. This was because the polyoxyalkylene unit was bonded to the polyvinyl alcohol chain via an ester bond, so that the polyoxyalkylene unit was detached by the saponification reaction.

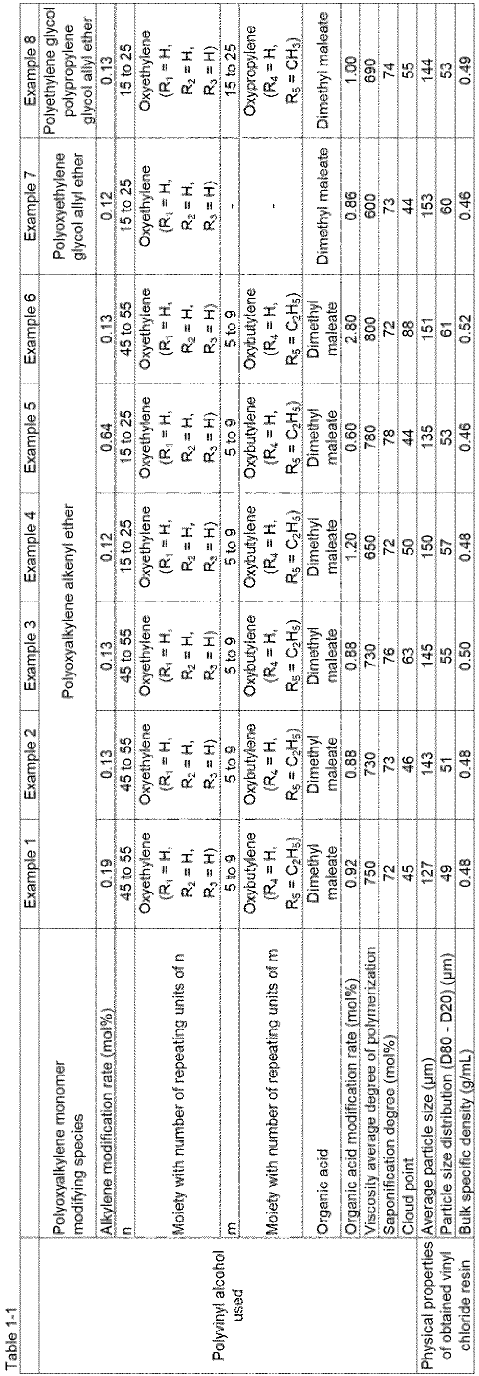

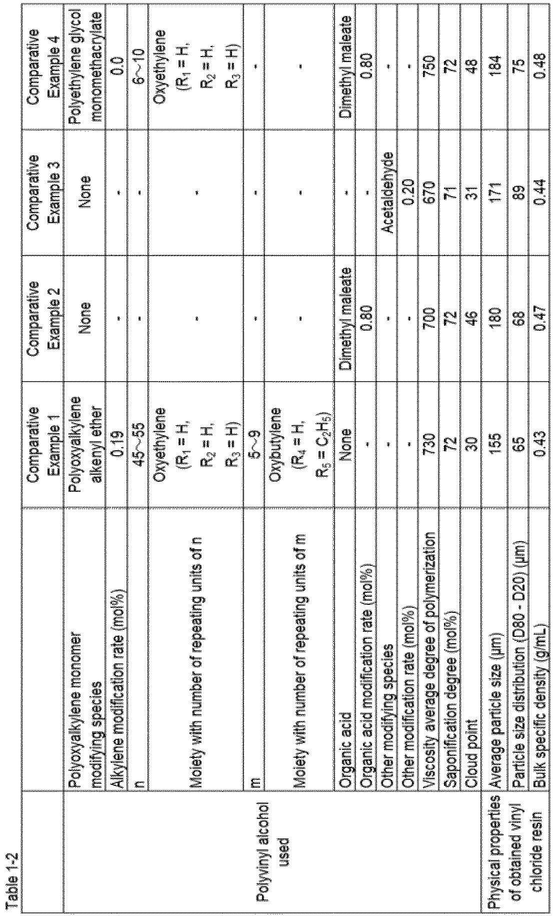

## Claims

1. A modified vinyl alcohol-based polymer, comprising a polyoxyalkylene unit, and an organic acid unit bonded to a polyvinyl alcohol chain, the polyoxyalkylene unit comprising a moiety represented by a general formula (I), the moiety being bonded to the polyvinyl alcohol chain only via an ether bond and/or a carbon-carbon bond,
wherein the ratio of the number of moles of monomer units constituting the polyvinyl alcohol chain of the modified vinyl alcohol-based polymer and bonded to the polyoxyalkylene unit to the total number of moles of the monomer units constituting the polyvinyl alcohol chain of the modified vinyl alcohol-based polymer is 0.01 mol% to 5 mol%, as measured according to the method disclosed therefor in the description, and the ratio of the number of moles of the organic acid unit to the total number of moles of the monomer units constituting the polyvinyl alcohol chain of the modified vinyl alcohol-based polymer is 0.1 mol% to 10 mol%, as measured according to the method disclosed therefor in the description, and wherein the saponification degree of the modified vinyl alcohol-based polymer is more than 70 mol%, as measured according to the method disclosed therefor in the description. 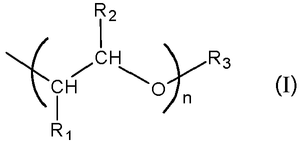 In the formula, both R₁ and R₂ are a hydrogen atom, and R₃ is an alkyl group or a hydrogen atom, n represents the number of repeating units and is an integer of 5 ≤ n ≤ 70.

2. The modified vinyl alcohol-based polymer according to claim 1, wherein at least a part of the polyoxyalkylene unit has a moiety represented by the general formula (II). 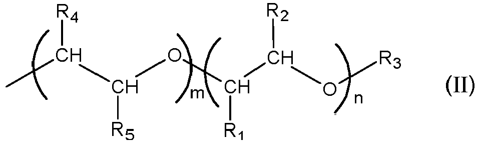 In the formula, R₁, R₂, and R₃ are as described in claim 1. One of R₄ and R₅ is a methyl group or an ethyl group, and the other is a hydrogen atom. m represents a number of repeating units, and 1 ≤ m ≤ 30, provided that the moiety with the number of repeating units of n and the moiety with the number of repeating units of m are different.

3. The modified vinyl alcohol-based polymer according to claim 1 or 2, wherein the organic acid unit comprises a carboxylic acid ester.

4. The modified vinyl alcohol-based polymer according to any one of claims 1 to 3, having a viscosity average degree of polymerization of 500 to 4000, as measured according to the method disclosed therefor in the description.

5. A dispersion stabilizer for suspension polymerization, comprising the modified vinyl alcohol-based polymer according to any one of claims 1 to 4.

6. A method for manufacturing a vinyl-based resin, comprising conducting suspension polymerization by dispersing a vinyl-based compound monomer or a mixture of the vinyl-based compound monomer and a monomer copolymerizable therewith in water using the dispersion stabilizer for suspension polymerization according to claim 5.

7. A method for manufacturing the modified vinyl alcohol-based polymer according to any one of claims 1 to 4, comprising a step of copolymerizing a vinyl ester-based monomer with an unsaturated monomer having the polyoxyalkylene unit in coexistence with an unsaturated organic acid to obtain a modified vinyl ester polymer.

## Patentansprüche

1. Modifiziertes Polymer auf Vinylalkoholbasis, umfassend eine Polyoxyalkyleneinheit und eine organische Säureeinheit, die an eine Polyvinylalkoholkette gebunden ist, wobei die Polyoxyalkyleneinheit einen Anteil umfasst, der durch eine allgemeine Formel (I) wiedergegeben wird, wobei der Anteil nur über eine Etherbindung und/oder eine Kohlenstoff-Kohlenstoff-Bindung an die Polyvinylalkoholkette gebunden ist,
wobei das Verhältnis der Anzahl der Mol an Monomereinheiten, die die Polyvinylalkoholkette des modifizierten Polymers auf Vinylalkoholbasis bilden und an die Polyoxyalkyleneinheit gebunden sind, zu der Gesamtanzahl der Mol der Monomereinheiten, welche die Polyvinylalkoholkette des modifizierten Polymers auf Vinylalkoholbasis bilden, 0,01 Mol.% bis 5 Mol.% ist, gemessen nach dem Verfahren, das dazu in der Beschreibung offenbart ist, und das Verhältnis der Anzahl der Mol der organischen Säureeinheit zu der Gesamtanzahl der Mole der Monomereinheiten, welche die Polyvinylalkoholkette des modifizierten Polymers auf Vinylalkoholbasis bilden, 0,1 Mol.% bis 10 Mol.% beträgt, gemessen nach dem Verfahren, das dazu in der Beschreibung offenbart ist, und wobei der Verseifungsgrad des modifizierten Polymers auf Vinylalkoholbasis mehr als 70 Mol.% beträgt, gemessen nach dem Verfahren, das dazu in der Beschreibung offenbart ist, 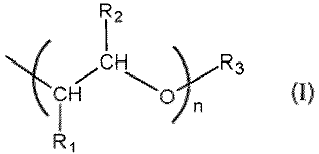 wobei in der Formel sowohl R₁ als auch R₂ ein Wasserstoffatom sind, und R₃ eine Alkylgruppe oder ein Wasserstoffatom ist, n die Anzahl der sich wiederholenden Einheiten wiedergibt und eine ganze Zahl von 5 ≤ n ≤ 70 ist.

2. Modifiziertes Polymer auf Vinylalkoholbasis nach Anspruch 1, wobei mindestens ein Teil der Polyoxyalkyleneinheit einen Anteil aufweist, der durch die allgemeine Formel (II) wiedergegeben wird, 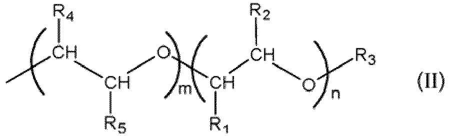 wobei in der Formel R₁, R₂ und R₃ wie in Anspruch 1 beschrieben sind, eines von R₄ und R₅ eine Methylgruppe oder eine Ethylgruppe ist, und das andere ein Wasserstoffatom ist, m eine Anzahl der sich wiederholenden Einheiten wiedergibt, und 1 ≤ m ≤ 30, mit der Maßgabe, dass der Anteil mit der Anzahl der sich wiederholenden Einheiten von n und der Anteil mit der Anzahl der sich wiederholenden Einheiten von m unterschiedlich sind.

3. Modifiziertes Polymer auf Vinylalkoholbasis nach Anspruch 1 oder 2, wobei die organische Säureeinheit einen Carbonsäureester umfasst.

4. Modifiziertes Polymer auf Vinylalkoholbasis nach einem der Ansprüche 1 bis 3 mit einem viskositätsgemittelten Polymerisationsgrad von 500 bis 4000, gemessen nach dem Verfahren, das dazu in der Beschreibung offenbart ist.

5. Dispersionsstabilisator für Suspensionspolymerisation, umfassend das modifizierte Polymer auf Vinylalkoholbasis nach einem der Ansprüche 1 bis 4.

6. Verfahren zur Herstellung eines Harzes auf Vinylbasis, umfassend Durchführen von Suspensionspolymerisation durch Dispergieren eines vinylbasierten Verbindungsmonomers oder einer Mischung des vinylbasierten Verbindungsmonomers und eines damit copolymerisierbaren Monomers in Wasser unter Verwendung des Dispersionsstabilisators für Suspensionspolymerisation gemäß Anspruch 5.

7. Verfahren zur Herstellung des modifizierten Polymers auf Vinylalkoholbasis nach einem der Ansprüche 1 bis 4, umfassend einen Schritt des Copolymerisierens eines Monomers auf Vinylesterbasis mit einem ungesättigten Monomer, bei dem die Polyoxyalkyleneinheit in Koexistenz mit einer ungesättigten organischen Säure vorliegt, um ein modifiziertes Vinylesterpolymer zu erhalten.

## Revendications

1. Polymère modifié à base d'alcool vinylique, comprenant un motif de polyoxyalkylène, et un motif d'acide organique lié à une chaîne d'alcool polyvinylique, le motif de polyoxyalkylène comprenant un fragment représenté par une formule générale (I), le fragment étant lié à la chaîne d'alcool polyvinylique seulement par l'intermédiaire d'une liaison éther et/ou d'une liaison carbone-carbone,
dans lequel le rapport du nombre de moles de motifs monomères constituant la chaîne d'alcool polyvinylique du polymère modifié à base d'alcool vinylique et liés au motif de polyoxyalkylène au nombre total de moles des motifs monomères constituant la chaîne d'alcool polyvinylique du polymère modifié à base d'alcool vinylique est de 0,01 % en mole à 5 % en mole, tel que mesuré selon le procédé décrit associé dans la description, et le rapport du nombre de moles du motif d'acide organique au nombre total de moles des motifs monomères constituant la chaîne d'alcool polyvinylique du polymère modifié à base d'alcool vinylique est de 0,1 % en mole à 10 % en mole, tel que mesuré selon le procédé décrit associé dans la description, et dans lequel le degré de saponification du polymère modifié à base d'alcool vinylique est supérieur à 70 % en mole, tel que mesuré selon le procédé décrit associé dans la description. 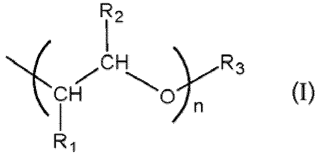 Dans la formule, R₁ et R₂ sont un atome hydrogène et R₃ est un groupe alkyle ou un atome hydrogène, n représente le nombre de motifs répétés et est un nombre entier de 5 ≤ n ≤ 70.

2. Polymère modifié à base d'alcool vinylique selon la revendication 1, dans lequel au moins une partie du motif de polyoxyalkylène a un fragment représenté par la formule générale (II). 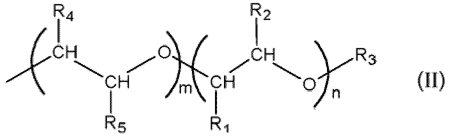 Dans la formule, R₁, R₂ et R₃ sont tels que décrits dans la revendication 1. Un parmi R₄ et R₅ est un groupe méthyle ou un groupe éthyle, et l'autre est un atome hydrogène, m représente un nombre de motifs répétés et 1 ≤ m ≤ 30, à condition que le fragment avec le nombre de motifs répétés de n et le fragment avec le nombre de motifs répétés de m sont différents.

3. Polymère modifié à base d'alcool vinylique selon la revendication 1 ou 2, dans lequel l'unité d'acide organique comprend un ester d'acide carboxylique.

4. Polymère modifié à base d'alcool vinylique selon l'une quelconque des revendications 1 à 3, ayant un degré moyen de viscosité de la polymérisation de 500 à 4000, tel que mesuré selon le procédé décrit associé dans la description.

5. Agent de stabilisation de dispersion pour une polymérisation en suspension, comprenant le polymère modifié à base d'alcool vinylique selon l'une quelconque des revendications 1 à 4.

6. Procédé de fabrication d'une résine à base de vinyle, comprenant la réalisation d'une polymérisation en suspension par dispersion d'un monomère de composé à base de vinyle ou d'un mélange du monomère de composé à base de vinyle et d'un monomère copolymérisable dans l'eau en utilisant l'agent de stabilisation de dispersion pour une polymérisation en suspension selon la revendication 5.

7. Procédé de fabrication du polymère modifié à base d'alcool vinylique selon l'une quelconque des revendications 1 à 4, comprenant une étape de copolymérisation d'un monomère à base d'ester vinylique avec un monomère insaturé ayant le motif de polyoxyalkylène en coexistence avec un acide organique insaturé pour obtenir un polymère modifié d'ester vinylique.
